(19) **Europäisches Patentamt / European Patent Office / Office européen des brevets**

(11) **EP 4 597 623 A1**

(12) **EUROPEAN PATENT APPLICATION**
published in accordance with Art. 153(4) EPC

(43) Date of publication:
06.08.2025 Bulletin 2025/32

(21) Application number: 23871894.4

(22) Date of filing: 12.09.2023

(51) International Patent Classification (IPC):
$H01M\ 4/525^{(2010.01)}$    $C01G\ 53/00^{(2025.01)}$
$H01M\ 4/505^{(2010.01)}$

(52) Cooperative Patent Classification (CPC):
C01G 53/00; H01M 4/505; H01M 4/525;
Y02E 60/10

(86) International application number:
PCT/JP2023/033166

(87) International publication number:
WO 2024/070659 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.09.2022 JP 2022157453

(71) Applicant: Panasonic Intellectual Property
Management Co., Ltd.
Kadoma-shi, Osaka 571-0057 (JP)

(72) Inventors:
• ESAKI, Shogo
  Kadoma-shi, Osaka 571-0057 (JP)
• HIBINO, Mitsuhiro
  Kadoma-shi, Osaka 571-0057 (JP)
• NAKURA, Kensuke
  Kadoma-shi, Osaka 571-0057 (JP)

(74) Representative: Novagraaf International SA
Chemin de l'Echo 3
1213 Onex, Geneva (CH)

(54) **POSITIVE ELECTRODE ACTIVE MATERIAL FOR NON-AQUEOUS ELECTROLYTE SECONDARY BATTERY, METHOD FOR PRODUCING POSITIVE ELECTRODE ACTIVE MATERIAL FOR NON-AQUEOUS ELECTROLYTE SECONDARY BATTERY, AND NON-AQUEOUS ELECTROLYTE SECONDARY BATTERY**

(57)    A positive electrode active material for a non-aqueous electrolyte secondary battery according to one embodiment comprises a lithium transition metal composite oxide represented by the compositional formula $Li_\alpha Na_\beta Ni_{1-b-c} Mn_b X_c O_d$ (where X is at least one element selected from metallic elements other than Li, Na, Ni, and Mn, $0.80 \leq \alpha \leq 1.20$, $0 \leq \beta \leq 0.05$, $0.80 \leq \alpha+\beta \leq 1.20$, $0.25 < b \leq 0.65$, $0 \leq c \leq 0.1$, $0.4 \leq 1-b-c < 0.75$, and d is a value satisfying the valence), and the ratio $I_{108}/I_{110}$ of the integrated intensity $I_{108}$ of the diffraction peak at the (108) plane to the integrated intensity $I_{110}$ of the diffraction peak at the (110) plane of the x-ray diffraction pattern obtained by powder x-ray diffraction of the lithium transition metal composite oxide is $I_{108}/I_{110} < 0.4$.

EP 4 597 623 A1

# Figure 1

**Description**

TECHNICAL FIELD

The present disclosure relates to a positive electrode active material for a non-aqueous electrolyte secondary battery, a method for manufacturing a positive electrode active material for a non-aqueous electrolyte secondary battery, and a non-aqueous electrolyte secondary battery using this positive electrode active material.

BACKGROUND ART

Non-aqueous electrolyte secondary batteries such as lithium-ion batteries have attracted attention also as power supplies for driving force of electric vehicles (EV), hybrid electric vehicles (HEV and PREV), and the like in recent years, and further expansion of the use is expected. For use as these power supplies for driving force, it is required to further increase capacity and improve charge-discharge efficiency of the non-aqueous electrolyte secondary batteries.

As a positive electrode active material to achieve the increase in capacity of the non-aqueous electrolyte secondary battery, a lithium-transition metal composite oxide containing Ni has attracted attention. For example, Patent Literature 1 discloses a Ni-containing lithium-transition metal composite oxide having half-value widths of diffraction peaks on a (108) plane and a (110) plane in powder X-ray diffraction (XRD) of less than or equal to 0.18°.

CITATION LIST

PATENT LITERATURE

PATENT LITERATURE 1: Japanese Unexamined Patent Application Publication No. 2005-053764

SUMMARY

It is an important challenge in the non-aqueous electrolyte secondary battery to increase the capacity and improve the charge-discharge efficiency. The conventional art including Patent Literature 1 cannot sufficiently deal with such a challenge, and still has large room for improvement.

It is an advantage of the present disclosure to provide a positive electrode active material that can achieve a non-aqueous electrolyte secondary battery having increased capacity and improved charge-discharge efficiency.

A positive electrode active material for a non-aqueous electrolyte secondary battery of an aspect of the present disclosure includes a lithium-transition metal composite oxide represented by a compositional formula $Li_a Na_\beta Ni_{1-b-c} Mn_b X_c O_d$, wherein X represents at least one element selected from the group consisting of metal elements other than Li, Na, Ni, and Mn, $0.80 \leq \alpha \leq 1.20$, $0 \leq \beta \leq 0.05$, $0.80 \leq \alpha+\beta \leq 1.20$, $0.25 < b \leq 0.65$, $0 \leq c \leq 0.1$, $0.4 \leq 1\text{-}b\text{-}c < 0.75$, and "d" represents a value satisfying an atomic valency, wherein a ratio $I_{108}/I_{110}$ satisfies $I_{108}/I_{110} < 0.4$, the ratio being an integrated intensity $I_{108}$ of a diffraction peak on a (108) plane relative to an integrated intensity $I_{110}$ of a diffraction peak on a (110) plane of an X-ray diffraction pattern obtained by powder X-ray diffraction of the lithium-transition metal composite oxide.

A non-aqueous electrolyte secondary battery of an aspect of the present disclosure comprises: a positive electrode including the above positive electrode active material; a negative electrode; a separator interposed between the positive electrode and the negative electrode; and a non-aqueous electrolyte.

According to the positive electrode active material for a non-aqueous electrolyte secondary battery of an aspect of the present disclosure, the non-aqueous electrolyte secondary battery having increased capacity and improved charge-discharge efficiency may be provided.

BRIEF DESCRIPTION OF DRAWINGS

FIG. 1 is a vertical sectional view of a non-aqueous electrolyte secondary battery of an example of an embodiment.
FIG. 2 is a view showing a powder X-ray diffraction pattern of a lithium-transition metal composite oxide produced in Example 1.
FIG. 3 is a view showing a powder X-ray diffraction pattern of a lithium-transition metal composite oxide produced in Example 2.
FIG. 4 is a view showing a powder X-ray diffraction pattern of a lithium-transition metal composite oxide produced in Example 3.

FIG. 5 is a view showing a powder X-ray diffraction pattern of a lithium-transition metal composite oxide produced in Example 4.

FIG. 6 is a view showing a powder X-ray diffraction pattern of a lithium-transition metal composite oxide produced in Example 5.

FIG. 7 is a view showing a powder X-ray diffraction pattern of a lithium-transition metal composite oxide produced in Example 6.

FIG. 8 is a view showing a powder X-ray diffraction pattern of a lithium-transition metal composite oxide produced in Example 7.

FIG. 9 is a view showing a powder X-ray diffraction pattern of a lithium-transition metal composite oxide produced in Example 8.

FIG. 10 is a view showing a powder X-ray diffraction pattern of a lithium-transition metal composite oxide produced in Example 9.

FIG. 11 is a view showing a powder X-ray diffraction pattern of a lithium-transition metal composite oxide produced in Example 10.

FIG. 12 is a view showing a powder X-ray diffraction pattern of a lithium-transition metal composite oxide produced in Example 11.

FIG. 13 is a view showing a powder X-ray diffraction pattern of a lithium-transition metal composite oxide produced in Example 12.

FIG. 14 is a view showing a powder X-ray diffraction pattern of a lithium-transition metal composite oxide produced in Comparative Example 1.

FIG. 15 is a view showing a powder X-ray diffraction pattern of a lithium-transition metal composite oxide produced in Comparative Example 2.

FIG. 16 is a view showing a powder X-ray diffraction pattern of a lithium-transition metal composite oxide produced in Comparative Example 3.

FIG. 17 is a view showing a powder X-ray diffraction pattern of a lithium-transition metal composite oxide produced in Comparative Example 4.

FIG. 18 is a view showing a powder X-ray diffraction pattern of a lithium-transition metal composite oxide produced in Comparative Example 5.

FIG. 19 is a view showing a powder X-ray diffraction pattern of a lithium-transition metal composite oxide produced in Comparative Example 6.

FIG. 20 is a view showing a powder X-ray diffraction pattern of a lithium-transition metal composite oxide produced in Comparative Example 7.

FIG. 21 is a view showing an SEM image of a lithium-transition metal composite oxide produced in Example 1.

FIG. 22 is a view showing an SEM image of a lithium-transition metal composite oxide produced in Comparative Example 1.

DESCRIPTION OF EMBODIMENTS

A lithium-transition metal composite oxide containing Ni may cause "disorder", which is contamination in Li sites with the Ni element, in production. Since inhibiting diffusion of Li ions in the lithium-transition metal composite oxide, the disorder becomes a cause of deterioration of charge and discharge capacities and charge-discharge efficiency of the battery.

Accordingly, the present inventors have made intensive investigation to solve the above problem, and consequently found that the non-aqueous electrolyte secondary battery having increased capacity and improved charge-discharge efficiency may be provided by, in a lithium-transition metal composite oxide containing Li, Ni, Mn as essential elements and a proportion of Ni relative to a total number of moles of metal elements excluding Li and Na of greater than or equal to 40 mol% and less than 75 mol% as a positive electrode active material, setting a ratio $I_{108}/I_{110}$ to be less than 0.4, the ratio being an integrated intensity $I_{108}$ of a diffraction peak on a (108) plane relative to an integrated intensity $I_{110}$ of a diffraction peak on a (110) plane of an X-ray diffraction pattern by X-ray diffraction of this composite oxide. This is presumably because setting $I_{108}/I_{110}$ to be less than 0.4 increases stability of a layered rock-salt structure of the lithium-transition metal composite oxide to specifically reduce a generation amount of the disorder.

Hereinafter, an example of embodiments of the positive electrode active material for a non-aqueous electrolyte secondary battery and the non-aqueous electrolyte secondary battery using this active material according to the present disclosure will be described in detail with reference to the drawings. The scope of the present disclosure includes aspects composed of selective combinations of constitutional elements of a plurality of embodiments and modified examples described below.

In the embodiments described below, a cylindrical battery in which a wound electrode assembly 14 is housed in a bottomed cylindrical exterior housing can 16 will be exemplified, but the exterior body of the battery is not limited to the cylindrical exterior housing can. Examples of other embodiments of the non-aqueous electrolyte secondary battery according to the present disclosure include a rectangular battery comprising a rectangular exterior housing can, a coin battery comprising a coin-shaped exterior housing can, and a pouch battery comprising an exterior body constituted with laminated sheets including a metal layer and a resin layer. The electrode assembly is not limited to the wound electrode assembly, but may be a stacked electrode assembly in which a plurality of positive electrodes and a plurality of negative electrodes are alternately stacked via a separator.

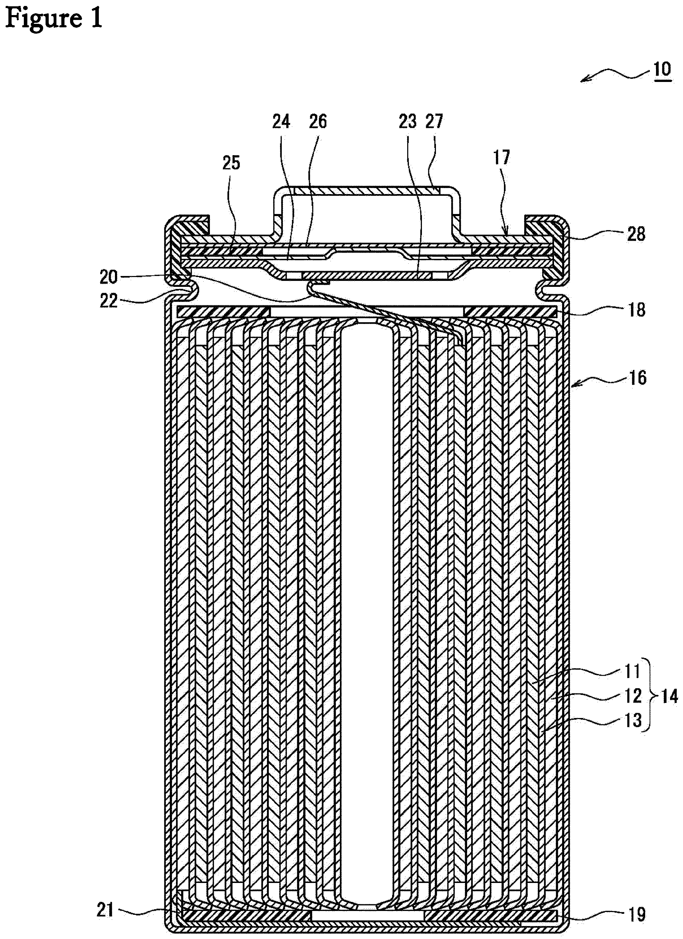

FIG. 1 is a sectional view of a non-aqueous electrolyte secondary battery 10 of an example of an embodiment. As exemplified in FIG. 1, the non-aqueous electrolyte secondary battery 10 comprises the wound electrode assembly 14, a non-aqueous electrolyte, and the exterior housing can 16 housing the electrode assembly 14 and the electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening portion on one end side in an axial direction, and the opening portion of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, and mixed solvents of two or more thereof, and the likes are used, for example. The non-aqueous solvent may contain a halogen-substituted derivative in which hydrogen of these solvents is at least partially replaced with a halogen atom such as fluorine. For the electrolyte salt, a lithium salt such as $LiPF_6$, $LiClO_4$, and $LiBF_4$ is used, for example. The electrolyte is not limited to the liquid electrolyte, but may be a solid electrolyte using a gel polymer or the like.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (a short direction). The two separators 13 are formed to be one size larger than at least the positive electrode 11, and are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side surface portion thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening portion of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening portion of the cap 27.

Hereinafter, the positive electrode 11, the negative electrode 12, and the separator 13, which constitute the non-aqueous electrolyte secondary battery 10, specifically the positive electrode 11, will be described in detail.

[Positive Electrode]

The positive electrode 11 has a positive electrode current collector and a positive electrode mixture layer formed on both surfaces of the positive electrode current collector. For the positive electrode current collector, a foil of a metal stable within a potential range of the positive electrode 11, such as aluminum and an aluminum alloy, a film in which such a metal is disposed on a surface layer thereof, and the like may be used. The positive electrode mixture layer includes a positive electrode active material, a conductive agent, and a binder. The positive electrode 11 may be produced by applying a positive electrode slurry including the positive electrode active material, the conductive agent, the binder, and the like on the surfaces of the positive electrode current collector (an applying step), drying the coating film (a drying step), and rolling the coating film to form the positive electrode mixture layer on both the surfaces of the positive electrode current collector (a rolling step).

Examples of the conductive agent included in the positive electrode mixture layer may include carbon materials such as carbon black, acetylene black, Ketjenblack, carbon nanotube (CNT), graphene, and graphite. Examples of the binder included in the positive electrode mixture layer may include fluororesins such as polytetrafluoroethylene (PTFE) and polyvinylidene fluoride (PVdF), polyacrylonitrile (PAN), a polyimide, an acrylic resin, and a polyolefin. These resins may be used in combination with carboxymethylcellulose (CMC) or a salt thereof, polyethylene oxide (PEO), and the like.

The positive electrode active material included in the positive electrode mixture layer has a layered structure, and includes a lithium-transition metal composite oxide containing at least Ni and Mn.

The lithium-transition metal composite oxide is represented by a compositional formula $Li_a Na_\beta Ni_{1-b-c} Mn_b X_c O_d$, wherein X represents at least one element selected from the group consisting of metal elements other than Li, Na, Ni, and Mn, $0.80 \leq \alpha \leq 1.20$, $0 \leq \beta \leq 0.05$, $0.80 \leq \alpha + \beta \leq 1.20$, $0.25 < b \leq 0.65$, $0 \leq c \leq 0.1$, $0.4 \leq 1-b-c < 0.75$, and "d" represents a value satisfying an atomic valency. This composite oxide is a composite oxide containing Li, Ni, and Mn as essential elements, and a proportion of Ni relative to a total number of moles of metal elements excluding Li and Na is greater than or equal to 40 mol% and less than 75 mol%.

In the compositional formula $Li_a Na_\beta Ni_{1-b-c} Mn_b X_c O_d$, a total mole ratio of Li and Na ($\alpha + \beta$) satisfies $0.80 \leq \alpha + \beta \leq 1.20$, and preferably satisfies $0.9 \leq \alpha + \beta \leq 1.15$. The mole ratio of Ni (1-b-c) satisfies $0.4 \leq 1-b-c < 0.75$, preferably satisfies $0.4 \leq 1-b-c \leq 0.7$, more preferably satisfies $0.45 \leq 1-b-c \leq 0.6$, and further preferably satisfies $0.45 \leq 1-b-c \leq 0.55$. The mole ratio of Mn (b) satisfies $0.25 < b \leq 0.65$, preferably satisfies $0.3 \leq b \leq 0.6$, more preferably satisfies $0.4 \leq b \leq 0.55$, and further preferably satisfies $0.45 \leq b \leq 0.55$. The mole ratios of Li, Ni, and Mn within the above ranges easily increases the charge and discharge capacities and improves the charge-discharge efficiency of the battery. The mole ratio of O (d) is a value satisfying an atomic valency.

In the compositional formula $Li_a Na_\beta Ni_{1-b-c} Mn_b X_c O_d$, the mole ratio ($\beta$) of Na satisfies $0 \leq \beta \leq 0.05$, and preferably satisfies $0 \leq \beta \leq 0.035$. The presence of a slight amount of Na stabilizes the layered structure of the composite oxide to more easily increase the capacity of the battery. If the mole ratio of Na is greater than 0.05, Na ions may be extracted from the positive electrode during charge, and the extracted Na ions may be occluded in the negative electrode. This causes a reaction with the non-aqueous electrolyte during charge and discharge to generate a byproduct, which may be a cause of deterioration of the charge and discharge capacities and the charge-discharge efficiency of the battery.

In the compositional formula $Li_a Na_\beta Ni_{1-b-c} Mn_b X_c O_d$, X represents at least one element selected from the group consisting of metal elements other than Li, Na, Ni, and Mn. X preferably represents at least one element selected from the group consisting of Mg, Ca, Sr, Ba, Sn, Ti, Si, V, Cr, Fe, Cu, Zn, Bi, Sb, B, Ga, In, P, Zr, Hf, Nb, Ta, Mo, W, Co, and Al, and among these, Al, Co, Zr, or P is more preferable. The mole ratio of X (c) satisfies $0 \leq c \leq 0.1$, preferably satisfies $0 \leq c \leq 0.05$, and more preferably satisfies $0 \leq c \leq 0.03$. The lithium-transition metal composite oxide containing X easily increases the capacity of the battery.

The positive electrode active material contains the composite oxide represented by the above compositional formula as a main component. Here, the main component means a component with the highest mass proportion among the constituents of the composite oxide. Although a composite oxide other than the composite oxide represented by the above compositional formula may be used in combination as the positive electrode active material in the mixture layer of the positive electrode 11, a content of the above composite oxide is preferably greater than or equal to 50 mass%, and may be substantially 100 mass%. The composition of the composite oxide may be measured by using an ICP emission spectrometer (for example, iCAP6300, manufactured by Thermo Fisher Scientific, Inc.).

The lithium-transition metal composite oxide is of, for example, secondary particles each formed by aggregation of a plurality of primary particles. An example of a volume-based media diameter (D50) of the lithium-transition metal composite oxide is greater than or equal to 1 $\mu$m and less than or equal to 30 $\mu$m, or greater than or equal to 3 $\mu$m and less than or equal to 20 $\mu$m. The D50 is a particle diameter at which a volumetric integrated value is 50% in particle size distribution measured by a laser diffraction scattering method. A BET specific surface area of the lithium-transition metal composite oxide is, for example, greater than or equal to 0.1 m$^2$/g and less than or equal to 10 m$^2$/g, or greater than or equal to 0.5 m$^2$/g and less than or equal to 5 m$^2$/g. The BET specific surface area within this range easily increases the capacity. The BET specific surface area is measured in accordance with a BET method (a nitrogen adsorption method) described in JIS R1626.

In the lithium-transition metal composite oxide, a ratio $I_{108}/I_{110}$ satisfies $T_{108}/T_{110} < 0.4$, the ratio being an integrated intensity $I_{108}$ of a diffraction peak on a (108) plane relative to an integrated intensity $I_{110}$ of a diffraction peak on a (110) plane of an X-ray diffraction pattern of X-ray diffraction. The ratio $I_{108}/I_{110}$ of less than 0.4 specifically reduces the disorder amount in the layered rock-salt structure of the lithium-transition metal composite oxide. In other words, the ratio $I_{108}/I_{110}$ of greater than or equal to 0.4 increases the disorder amount in the layered structure of the lithium-transition metal composite oxide. This is presumably because the ratio $I_{108}/I_{110}$ of greater than or equal to 0.4 deteriorates stability of the layered structure of the lithium-transition metal composite oxide. Thus, the ratio $I_{108}/I_{110}$ of less than 0.4 may increase the charge and discharge capacities and improve the charge-discharge efficiency of the battery.

Here, the X-ray diffraction pattern may be obtained by using a desktop X-ray diffraction device (manufactured by Rigaku Corporation, trade name: "MiniFlex 600"). The diffracted X-ray in this case is detected with a high-speed one-dimensional detector (D/teX Ultra 2). The measuring condition with the X-ray diffraction device was set as follows: CuK$\alpha$ ray for an X-ray source, a tubular voltage at 40 kV, a tubular current at 15 mA, a diffusion slit (DS) of 0.625°, a scattering slit (SS) of 13 mm (open), a light-receiving slit (RS) of 8 mm, a scanning axis of 2θ/θ, a scanning method being a continuous method, a 2θ-scanning range with greater than or equal to 10° and less than or equal to 80°, a scanning rate of 10°/min, and a step width of 0.02°. The X-ray diffraction measuring device and the X-ray diffraction measuring condition are not limited to the above conditions.

The data obtained by the above X-ray diffraction measurement is fitted with a pseudo-Voigt function in the expression (3), which is composed of a linear sum of a Lorentz function represented by the expression (1) and a Gauss function represented by the expression (2), wherein a scanning angle 2θ is "x". The fitting yields a peak height "h", a peak position "u", a standard deviation "w", a component of the Lorentz function "η", and a component of the Gauss function (1-η). A value of a product of the peak height "h" and the standard deviation "w" obtained by the fitting is specified as an integrated intensity, and the integrated intensity at each reflection index was calculated. This fitting with the pseudo-Voigt function may be realized by, for example, using a computer comprising a CPU, a ROM, a RAM, an HDD, and interfaces (for example, a personal computer). For example, a solver function of Excel, available from Microsoft Corporation, and a nonlinear fitting function of Origin, available from Lightstone Corp., may be installed into this computer to perform processing. A software specialized for analysis (for example, X-ray analysis integrated software available from Rigaku Corporation, SmartLab Studio II, "RIETAN-FP" program (F. Izumi and K. Momma, Solid State Phenom., 130, 15-20 (2007).) may be installed to execute the above processing by executing this software. Note that the fitting process is not limited to the above method.

[Expression 1]

$$f(x) = \frac{h}{1 + \frac{(x-u)^2}{w^2}} \qquad \text{Expression (1)}$$

[Expression 2]

$$g(x) = h \exp\left[-\frac{(x-u)^2}{2w^2}\right] \qquad \text{Expression (2)}$$

[Expression 3]

$$h(x) = \eta f(x) + (1-\eta)g(x) \qquad \text{Expression (3)}$$

In the lithium-transition metal composite oxide, a ratio $I_{003}/I_{104}$ preferably satisfies $I_{003}/I_{104} > 1.0$, the ratio being an integrated intensity $I_{003}$ of a diffraction peak on a (003) plane relative to an integrated intensity $I_{104}$ of a diffraction peak on a (104) plane of the X-ray diffraction pattern by the above X-ray diffraction. If the ratio $I_{003}/I_{104}$ is less than or equal to 1.0, the stability of the layered structure of the lithium-transition metal composite oxide is decreased to deteriorate the charge-discharge efficiency of the battery.

In the lithium-transition metal composite oxide, half-value widths of the diffraction peaks on the (108) plane and the (110) plane of the X-ray diffraction pattern by the above X-ray diffraction are preferably greater than or equal to 0.2° and less than or equal to 0.8°. The half-value widths within the above range may allow the layered structure to have an appropriately strained state in the plane direction, which may increase the capacity of the battery. If the half-value widths are less than 0.2°, the layered structure in a state before charge and discharge is extremely stable, but the layered structure becomes unstable via a charge process as compared with the case of the half-value widths within the above range, the layered structure becomes further unstable via a discharge process, and deteriorates the charge and discharge capacities and the charge-discharge efficiency. If the half-value widths are greater than 0.8°, the layered structure is excessively strained to become brittle, and deteriorates the charge and discharge capacities and the charge-discharge efficiency.

Next, a method for manufacturing the lithium-transition metal composite oxide (positive electrode active material) having the integrated intensity $I_{108}/I_{110}$ of the diffraction peaks of less than 0.4 will be described.

The manufacturing process of the positive electrode active material of an example of an embodiment includes: (1) a step of mixing and calcining a sodium raw material, a nickel raw material, a manganese raw material, and a raw material of the additive element X to synthesize a sodium composite oxide; and (2) a step of reacting the sodium composite oxide and a lithium compound to at least partially ion-exchange Na in the sodium composite oxide to Li.

This method can yield a layered rock-salt structure having a reduced disorder amount as compared with a method of synthesizing the lithium-containing composite oxide from a lithium raw material.

As the sodium raw material, at least one of sodium (metal sodium) and a sodium compound is used. The sodium compound is not particularly limited as long as it contains sodium, and examples thereof include acetate salts such as $CH_3COONa$ and $CH_3COONa \cdot 3H_2O$, nitrate salts such as $NaNO_3$, sulfate salts such as $Na_2SO_4$, carbonate salts such as $Na_2CO_3$, hydrogen carbonate salts such as $NaHCO_3$, hydroxides such as NaOH, and oxides such as $Na_2O$ and $Na_2O_2$. Among these, $Na_2CO_3$, $NaHCO_3$, NaOH, and $NaNO_3$ are particularly preferable.

As the nickel raw material, at least one of nickel (metal nickel) and a nickel compound is used. The nickel compound is not particularly limited as long as it contains nickel, and examples thereof include oxides such as NiO, hydroxides such as NiOH, $Ni(OH)_2$, and NiOOH, nitrate salts such as $NiNO_3$, carbonate salts such as $NiCO_3$ and $Ni_4CO_3(OH)_6(H_2O)_4$, and sulfate salts such as $NiSO_4$. Among these, $Ni(OH)_2$ is particularly preferable.

As the manganese raw material, at least one of manganese (metal manganese) and a manganese compound is used. The manganese compound is not particularly limited as long as it contains manganese, and examples thereof include oxides such as MnO, $Mn_2O_3$, $Mn_3O_4$, and $MnO_2$, hydroxides such as $Mn(OH)_2$ and MnOOH, carbonate salts such as $MnCO_3$, nitrate salts such as $Mn(NO_3)_2$, and sulfate salts such as $MnSO_4$. Among these, $Mn(OH)_2$ is particularly preferable.

As the raw material of the additive element X, at least one of X and a compound of X is used similarly to the nickel raw material and the manganese raw material. The compound is not particularly limited as long as it contains X, and examples thereof include oxides, hydroxides, carbonate salts, nitrate salts, and sulfate salts.

The above compounds may be used as the raw materials of nickel, manganese, and X, but a compound including nickel and manganese, a compound including nickel, manganese, and X, a compound including nickel and X, and a compound including manganese and X may also be used.

A mixing ratio of these raw materials may be appropriately set, but these raw materials are preferably mixed so that the chemical composition is represented by the compositional formula $Na_yNi_{1-b-c}Mn_bX_cO_d$, wherein $0.80 \leq y \leq 1.20$, $0.25 < b \leq 0.65$, $0 \leq c \leq 0.1$, $0.4 \leq 1-b-c < 0.75$, and "d" represents a value satisfying an atomic valency. A method for mixing the raw materials is not particularly limited as long as it may uniformly mix these raw materials, and mixing using a known mixing machine such as a mixer may be exemplified.

The mixture is calcined in the atmosphere or in an oxygen flow. The calcining temperature is preferably greater than or equal to 600°C and less than or equal to 1100°C, and more preferably greater than or equal to 700°C and less than or equal to 1000°C. When the calcining temperature is greater than or equal to 600°C and less than or equal to 900°C, the calcining time is preferably greater than or equal to 1 hour and less than or equal to 50 hours. When the calcining temperature is greater than or equal to 900°C and less than or equal to 1000°C, the calcining time is preferably greater than or equal to 1 hour and less than or equal to 10 hours. The cooling method is not particularly limited, and the method is natural cooling (standing to cool in the furnace), for example. After the cooling, the calcined product is crushed by a known method to obtain the sodium composite oxide.

Examples of a preferable method for the ion-exchanging step from Na in the sodium composite oxide to Li include a method of adding a molten salt bed of a lithium salt into the sodium-composite transition metal oxide and heating the mixture. For the lithium salt, at least one selected from the group consisting of lithium nitrate, lithium sulfate, lithium chloride, lithium carbonate, lithium hydroxide, lithium iodide, and lithium bromide is preferably used.

A heating temperature during the treatment in the ion-exchanging step is preferably greater than or equal to 200°C and less than or equal to 400°C, and more preferably greater than or equal to 250°C and less than or equal to 350°C. If the heating temperature in this time is greater than 400°C, the reaction may rapidly proceed to cause a ununiform reaction. If the heating temperature is less than 200°C, the reaction may not sufficiently proceed. The treating time is preferably greater than or equal to 1 hour and less than or equal to 50 hours, more preferably greater than or equal to 2 hours and less than or equal to 20 hours, and more preferably greater than or equal to 2 hours and less than or equal to 10 hours. The cooling method is not particularly limited, and the method is natural cooling (standing to cool in the furnace), for example. After the cooling, the obtained product is washed well with water, ethanol, methanol, or the like, and dried to obtain the lithium-transition metal composite oxide. Note that an atmosphere during the drying is preferably in the atmosphere or in vacuo, and not particularly limited. The heating treatment may be performed again after the washing.

[Negative Electrode]

The negative electrode 12 has a negative electrode current collector and a negative electrode mixture layer formed on both surfaces of the negative electrode current collector. For the negative electrode current collector, a foil of a metal stable within a potential range of the negative electrode 12, such as copper and a copper alloy, a film in which such a metal is disposed on a surface layer thereof, and the like may be used. The negative electrode mixture layer includes a negative electrode active material and a binder. The negative electrode 12 may be produced by applying a negative electrode slurry including the negative electrode active material, the binder, and the like on the surfaces of the negative electrode current collector, drying the coating film, and then rolling the coating film to form the negative electrode mixture layer on both the surfaces of the negative electrode current collector.

The negative electrode active material included in the negative electrode mixture layer is not particularly limited as long as it may reversibly occlude and release lithium ions, and a carbon material such as graphite is typically used. The graphite may be any of natural graphite such as flake graphite, massive graphite, and amorphous graphite, and artificial graphite such as massive artificial graphite and graphitized mesophase carbon micro bead. As the negative electrode active material, a metal that forms an alloy with Li, such as Si and Sn, a metal compound including Si, Sn, or the like, a lithium-titanium composite oxide, and the like may be used. A material in which a carbon coating is provided on these materials may also be used. For example, a Si-containing compound represented by $SiO_x$ ($0.5 \leq x \leq 1.6$) or a Si-containing compound in which Si fine particles are dispersed in a lithium silicate phase represented by $Li_{2y}SiO_{(2+y)}$ ($0 < y < 2$) may be used in combination with the graphite.

For the binder included in the negative electrode mixture layer, a fluorine-containing resin such as PTFE and PVdF, PAN, a polyimide, an acrylic resin, a polyolefin, or the like may be used as in the case of the positive electrode 11, but styrene-butadiene rubber (SBR) is preferably used. The negative electrode mixture layer may include CMC or a salt thereof, polyacrylic acid (PAA) or a salt thereof, polyvinyl alcohol (PVA), or the like.

[Separator]

For the separator 13, a porous sheet having an ion permeation property and an insulation property is used, for example. Specific examples of the porous sheet include a microporous thin film, a woven fabric, and a nonwoven fabric. As a material for the separator 13, a polyolefin such as polyethylene and polypropylene, cellulose, or the like is preferable. The separator 13 may have a single-layered structure or a multi-layered structure. On a surface of the separator 13, a highly heat-resistant resin layer, such as an aramid resin, or a filler layer including an inorganic compound filler may be provided.

EXAMPLES

Hereinafter, the present disclosure will be further described with Examples, but the present disclosure is not limited to these Examples.

<Example 1>

[Production of Positive Electrode Active Material]

A hydroxide containing Ni and Mn at a mole ratio of 1:1 and sodium carbonate were mixed at a mole ratio of Ni:Mn:Na = 0.5:0.5:1.05. The obtained mixture was heated at a temperature-raising rate of 1°C/min, calcined at 800°C for 24 hours in air, and then quickly cooled in air to obtain a Na-containing composite oxide. Lithium nitrate and lithium chloride were mixed at a mole ratio of $LiNO_3$:LiCl = 88:12 to prepare a Li-containing molten salt. This Li-containing molten salt and the above Na-containing compound were mixed at a mole ratio of Li:Na = 30:1. The obtained mixture was heated at a temperature-raising rate of 5°C/min, heated at 280°C for 5 hours in air, and cooled at a temperature-lowering rate of 2°C/min to obtain a Li-Na mixture. This Li-Na mixture was washed with a sufficient amount of water, and heated in vacuo at 160°C for 4 hours to obtain a lithium-transition metal composite oxide. As noted above, the lithium-transition metal composite oxide was obtained in Example 1 by the production method including: the step of synthesizing the sodium composite oxide of the present disclosure; and the step of at least partially ion-exchanging Na in the sodium composite oxide to Li.

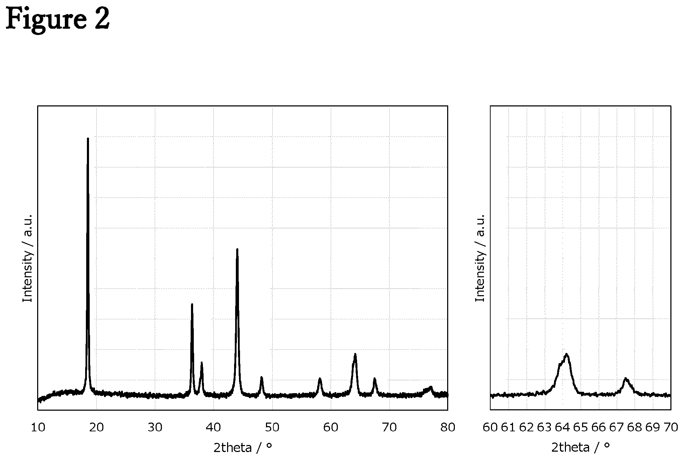

The lithium-transition metal composite oxide of Example 1 was subjected to X-ray diffraction measurement. FIG. 2 shows an entire view of the result of X-ray diffraction and a 60-70° magnified view of the lithium-transition metal composite oxide of Example 1. A ratio $I_{108}/I_{110}$ of an integrated intensity $I_{108}$ of a diffraction peak on a (108) plane relative to

an integrated intensity $I_{110}$ of a diffraction peak on a (110) plane of the X-ray diffraction pattern by the X-ray diffraction was 0.39. A ratio $I_{003}/I_{104}$ of an integrated intensity $I_{003}$ of a diffraction peak on a (003) plane relative to an integrated intensity $I_{104}$ of a diffraction peak on a (104) plane of the X-ray diffraction pattern was 1.02. Half-value widths of the diffraction peaks on the (108) plane and the (110) plane of the X-ray diffraction pattern were respectively 0.33° and 0.45°.

A disorder amount of the lithium-transition metal composite oxide of Example 1 was calculated from Rietveld analysis results of the X-ray diffraction pattern.

Specifically, the disorder amount was calculated from the above X-ray diffraction pattern by using an X-ray analysis integrated software manufactured by Rigaku Corporation, SmartLab Studio II. As a result, the disorder amount of the lithium-transition metal composite oxide of Example 1 was 5.0%.

[Production of Positive Electrode]

The above positive electrode active material, acetylene black, and polyvinylidene fluoride were mixed so that a mass ratio thereof was 92:5:3, and N-methyl-2-pyrrolidone (NMP) was used as a dispersion medium to prepare a positive electrode paste. This positive electrode paste was applied on aluminum foil, the coating film was dried, and then the coating film was rolled with a roller to produce a positive electrode in which a positive electrode mixture layer was formed on the positive electrode current collector.

[Preparation of Non-Aqueous Electrolyte Liquid]

Into a mixed solvent in which fluoroethylene carbonate (FEC) and methyl propionate (FMP) were mixed at a volume ratio of 1:3, lithium hexafluorophosphate ($LiPF_6$) was dissolved so that the concentration was 1 mol/L to prepare a non-aqueous electrolyte.

[Production of Test Cell]

An electrode assembly in which the above positive electrode and lithium metal as a negative electrode were stacked with facing each other via a separator, and the above non-aqueous electrolyte liquid were housed in a coin-shaped exterior housing can, and an opening portion of the exterior housing can was sealed with a gasket and a sealing assembly to produce a test cell (a non-aqueous electrolyte secondary battery).

[Evaluation of Charge-Discharge Efficiency]

Under a condition at 25°C, the above test cell was charged at a constant current of 0.2 C until 4.5 V, and then charged at a constant voltage of 4.5 V until a current value reached 0.02 C. After a rest for 20 minutes, the test cell was discharged at a constant current of 0.2 C until 2.5 V, and rested for 20 minutes. From a charge capacity and a discharge capacity measured in the above charge and discharge, charge-discharge efficiency was determined by the following formula.

$$\text{Charge-discharge efficiency (\%)} = \text{Discharge capacity / Charge capacity} \times 100$$

<Example 2>

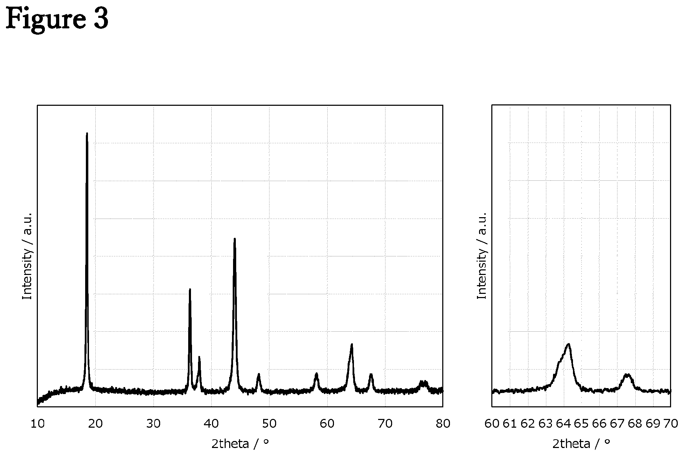

A test cell was produced, measured, and evaluated in the same manner as in Example 1 except that, in the production of the positive electrode active material, the hydroxide containing Ni and Mn at a mole ratio of 1:1, aluminum nitride nonahydrate, and sodium carbonate were mixed at a mole ratio of Ni:Mn:Al:Na = 0.4975:0.4975:0.005:1.05. FIG. 3 shows a result of X-ray diffraction of the lithium-transition metal composite oxide of Example 2.

<Example 3>

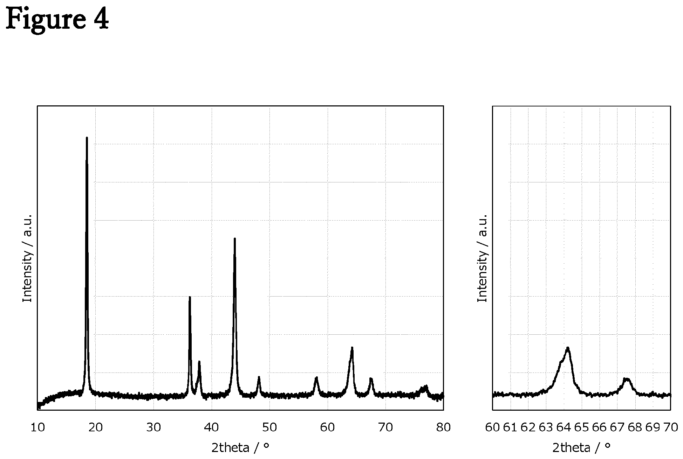

A test cell was produced, measured, and evaluated in the same manner as in Example 1 except that, in the production of the positive electrode active material, the hydroxide containing Ni and Mn at a mole ratio of 1:1, aluminum nitride nonahydrate, and sodium carbonate were mixed at a mole ratio of Ni:Mn:Al:Na = 0.495:0.495:0.01:1.05. FIG. 4 shows a result of X-ray diffraction of the lithium-transition metal composite oxide of Example 3.

<Example 4>

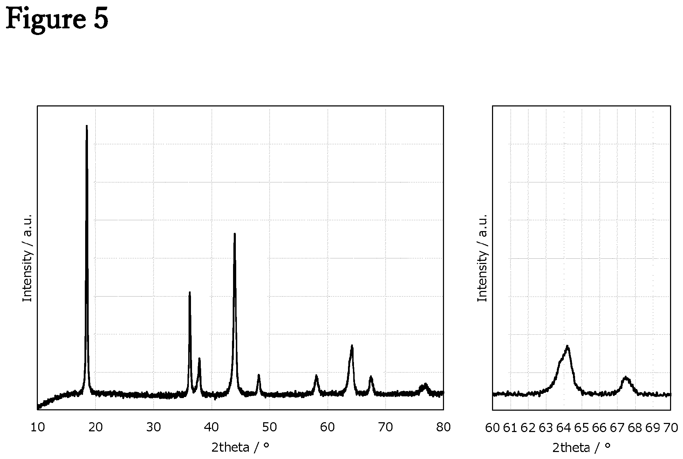

A test cell was produced, measured, and evaluated in the same manner as in Example 1 except that, in the production of the positive electrode active material, the hydroxide containing Ni and Mn at a mole ratio of 1:1, aluminum nitride nonahydrate, and sodium carbonate were mixed at a mole ratio of Ni:Mn:Al:Na = 0.4875:0.4875:0.025:1.05. FIG. 5 shows a result of X-ray diffraction of the lithium-transition metal composite oxide of Example 4.

<Example 5>

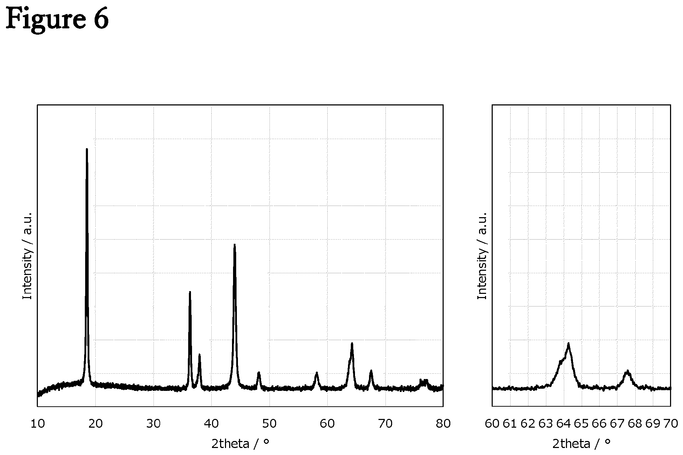

A test cell was produced, measured, and evaluated in the same manner as in Example 1 except that, in the production of the positive electrode active material, the hydroxide containing Ni and Mn at a mole ratio of 1:1, cobalt nitride hexahydrate, and sodium carbonate were mixed at a mole ratio of Ni:Mn:Co:Na = 0.492:0.492:0.016:1.05. FIG. 6 shows a result of X-ray diffraction of the lithium-transition metal composite oxide of Example 5.

<Example 6>

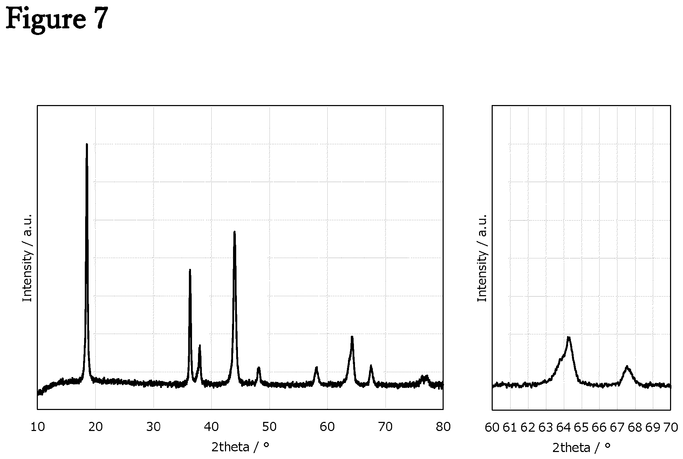

A test cell was produced, measured, and evaluated in the same manner as in Example 1 except that, in the production of the positive electrode active material, the hydroxide containing Ni and Mn at a mole ratio of 1:1, cobalt nitride hexahydrate, and sodium carbonate were mixed at a mole ratio of Ni:Mn:Co:Na = 0.4845:0.4845:0.031:1.05. FIG. 7 shows a result of X-ray diffraction of the lithium-transition metal composite oxide of Example 6.

<Example 7>

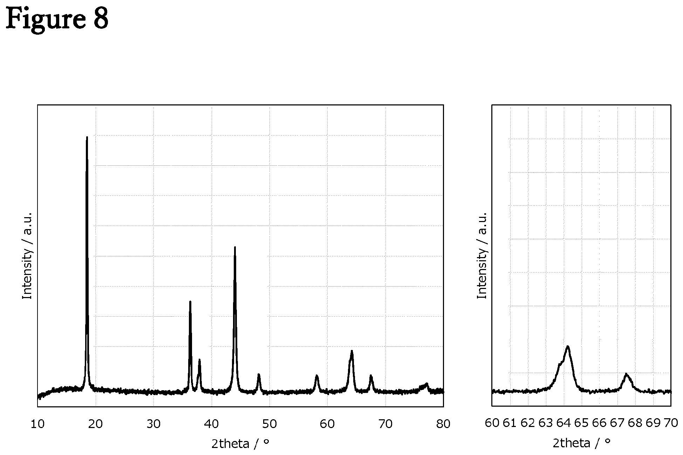

A test cell was produced, measured, and evaluated in the same manner as in Example 1 except that, in the production of the positive electrode active material, the hydroxide containing Ni and Mn at a mole ratio of 1:1, zirconium oxide, and sodium carbonate were mixed at a mole ratio of Ni:Mn:Zr:Na = 0.4975:0.4975:0.005:1.05. FIG. 8 shows a result of X-ray diffraction of the lithium-transition metal composite oxide of Example 7.

<Example 8>

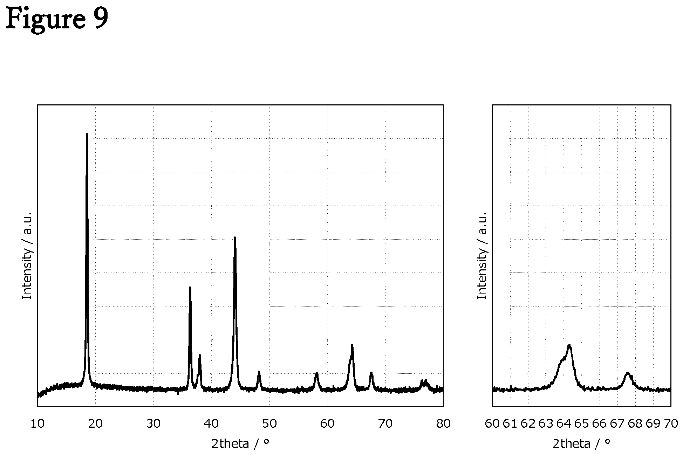

A test cell was produced, measured, and evaluated in the same manner as in Example 1 except that, in the production of the positive electrode active material, the hydroxide containing Ni and Mn at a mole ratio of 1:1, sodium phosphate, and sodium carbonate were mixed at a mole ratio of Ni:Mn:P:Na = 0.4975:0.4975:0.005:1.05. FIG. 9 shows a result of X-ray diffraction of the lithium-transition metal composite oxide of Example 8.

<Example 9>

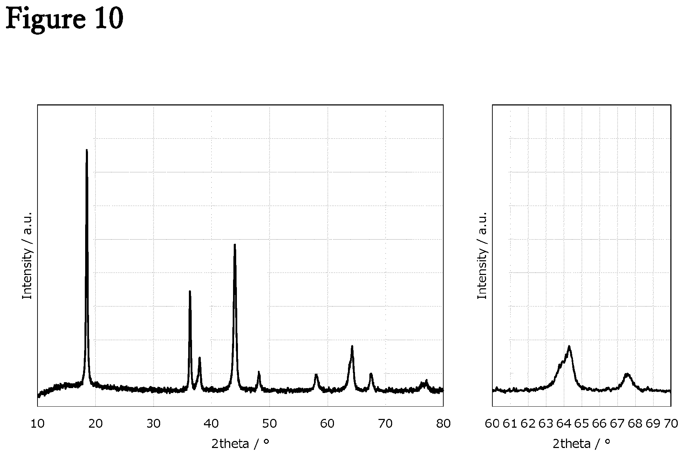

A test cell was produced, measured, and evaluated in the same manner as in Example 1 except that, in the production of the positive electrode active material, the hydroxide containing Ni and Mn at a mole ratio of 1:1, sodium phosphate, and sodium carbonate were mixed at a mole ratio of Ni:Mn:P:Na = 0.495:0.495:0.01:1.05. FIG. 10 shows a result of X-ray diffraction of the lithium-transition metal composite oxide of Example 9.

<Example 10>

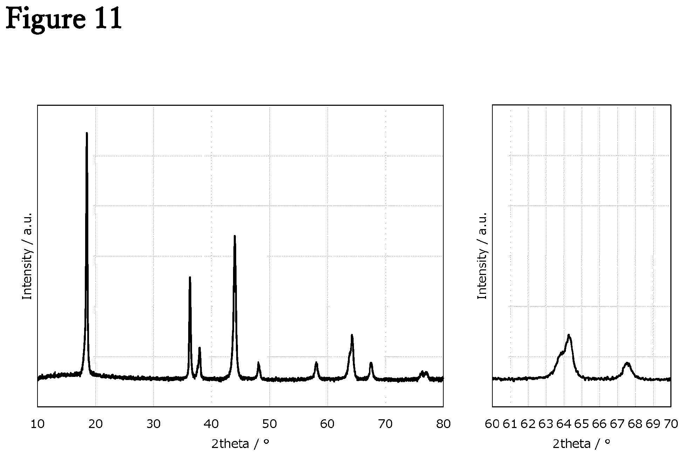

A test cell was produced, measured, and evaluated in the same manner as in Example 1 except that, in the production of the positive electrode active material, a hydroxide containing Ni and Mn at a mole ratio of 46:54 and sodium carbonate were mixed at a mole ratio of Ni:Mn:Na = 0.46:0.54:1.05. FIG. 11 shows a result of X-ray diffraction of the lithium-transition metal composite oxide of Example 10.

<Example 11>

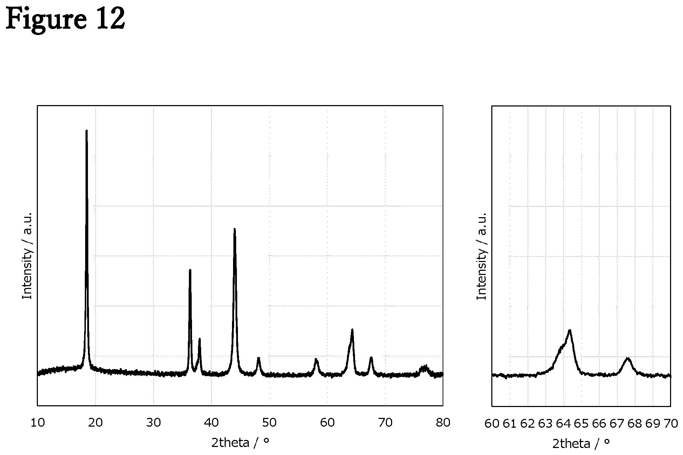

A test cell was produced, measured, and evaluated in the same manner as in Example 1 except that, in the production of the positive electrode active material, the Li-containing molten salt and the Na-containing compound were mixed at a mole ratio of Li:Na = 5:1. FIG. 12 shows a result of X-ray diffraction of the lithium-transition metal composite oxide of Example 11.

<Example 12>

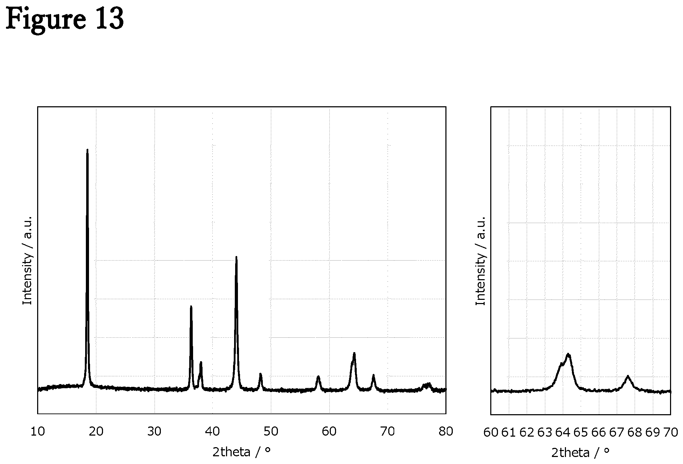

A test cell was produced, measured, and evaluated in the same manner as in Example 1 except that, in the production of the positive electrode active material, the Li-containing molten salt and the Na-containing compound were mixed at a mole ratio of Li:Na = 5:1, and the obtained mixture was heated at a temperature-raising rate of 5°C/min, heated at 350°C for 5 hours in air, and cooled at a temperature-lowering rate of 2°C/min to obtain a Li-Na mixture. FIG. 13 shows a result of X-ray diffraction of the lithium-transition metal composite oxide of Example 12.

<Comparative Example 1>

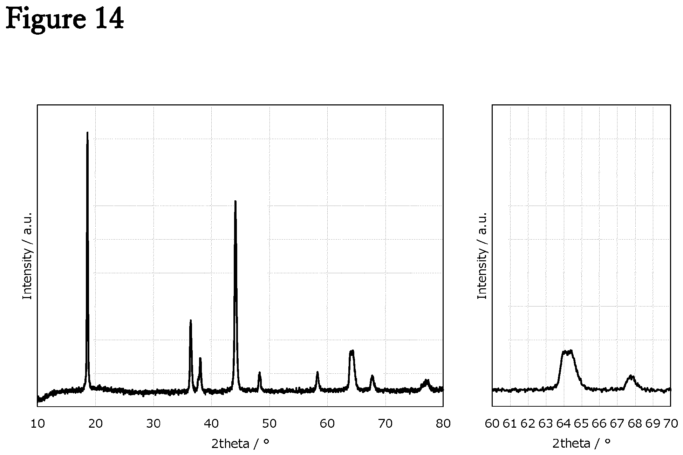

In the production of the positive electrode active material, the hydroxide containing Ni and Mn at a mole ratio of 1:1 and lithium hydroxide were mixed at a mole ratio of Ni:Mn:Li = 0.5:0.5:1.05, and the obtained mixture was heated at a temperature-raising rate of 5°C/min, calcined at 900°C for 10 hours in air, and then cooled at a temperature-lowering rate of 10°C/min to obtain a lithium-transition metal composite oxide. A test cell was produced, measured, and evaluated in the same manner as in Example 1 except for the production of the positive electrode active material. FIG. 14 shows a result of X-ray diffraction of the lithium-transition metal composite oxide of Comparative Example 1.

<Comparative Example 2>

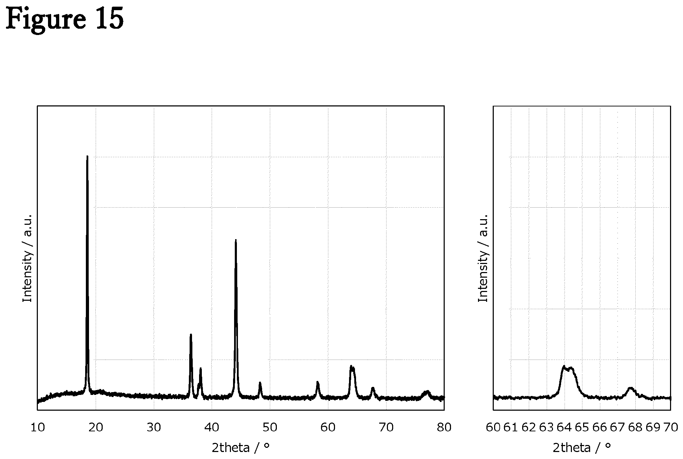

A test cell was produced, measured, and evaluated in the same manner as in Comparative Example 1 except that, in the production of the positive electrode active material, the hydroxide containing Ni and Mn at a mole ratio of 1:1, aluminum nitride nonahydrate, and lithium hydroxide were mixed at a mole ratio of Ni:Mn:Al:Li = 0.4975:0.4975:0.005:1.05. FIG. 15 shows a result of X-ray diffraction of the lithium-transition metal composite oxide of Comparative Example 2.

<Comparative Example 3>

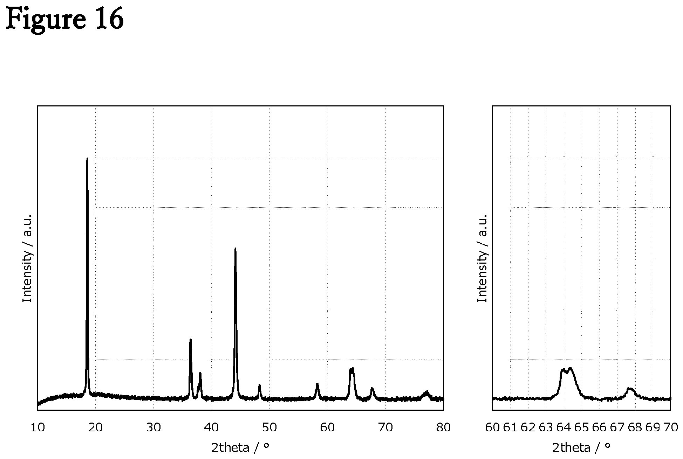

A test cell was produced, measured, and evaluated in the same manner as in Comparative Example 1 except that, in the production of the positive electrode active material, the hydroxide containing Ni and Mn at a mole ratio of 1:1, aluminum nitride nonahydrate, and lithium hydroxide were mixed at a mole ratio of Ni:Mn:Al:Li = 0.492:0.492:0.016:1.05. FIG. 16 shows a result of X-ray diffraction of the lithium-transition metal composite oxide of Comparative Example 3.

<Comparative Example 4>

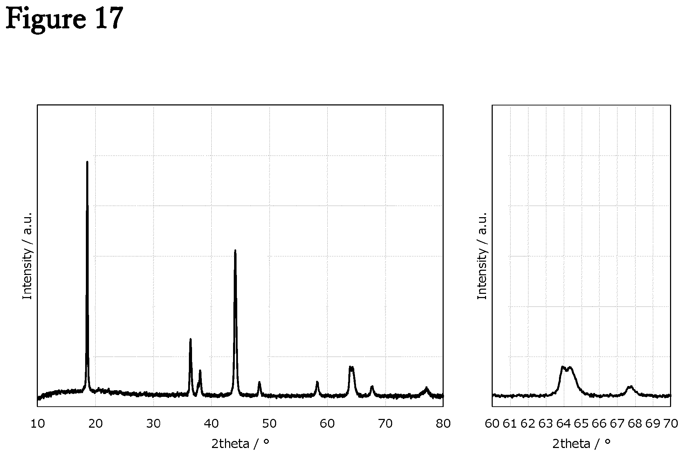

A test cell was produced, measured, and evaluated in the same manner as in Comparative Example 1 except that, in the production of the positive electrode active material, the hydroxide containing Ni and Mn at a mole ratio of 1:1, aluminum nitride nonahydrate, and lithium hydroxide were mixed at a mole ratio of Ni:Mn:Al:Li = 0.4845:0.4845:0.031:1.05. FIG. 17 shows a result of X-ray diffraction of the lithium-transition metal composite oxide of Comparative Example 4.

<Comparative Example 5>

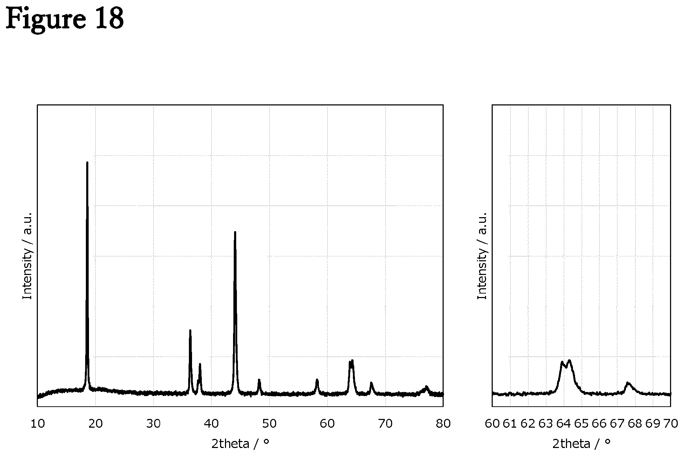

A test cell was produced, measured, and evaluated in the same manner as in Comparative Example 1 except that, in the production of the positive electrode active material, the hydroxide containing Ni and Mn at a mole ratio of 1:1 and lithium hydroxide were mixed at a mole ratio of Ni:Mn:Li = 0.5:0.5:1.01. FIG. 18 shows a result of X-ray diffraction of the lithium-transition metal composite oxide of Comparative Example 5.

<Comparative Example 6>

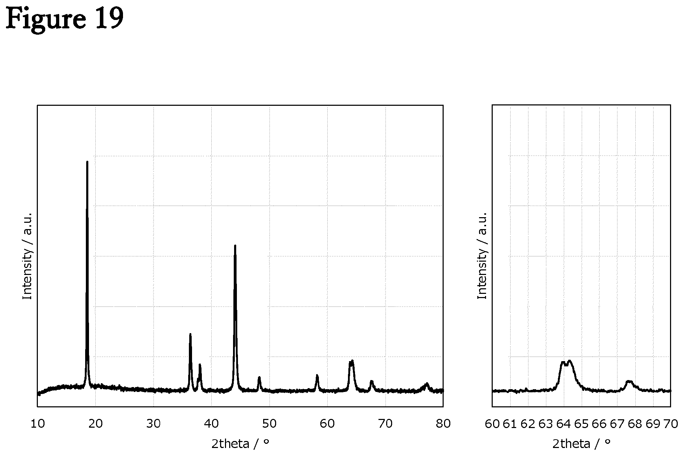

A test cell was produced, measured, and evaluated in the same manner as in Comparative Example 1 except that, in the production of the positive electrode active material, the hydroxide containing Ni and Mn at a mole ratio of 1:1, cobalt nitride hexahydrate, and lithium hydroxide were mixed at a mole ratio of Ni:Mn:Co:Li = 0.4845:0.4845:0.031:1.01. FIG. 19 shows a result of X-ray diffraction of the lithium-transition metal composite oxide of Comparative Example 6.

<Comparative Example 7>

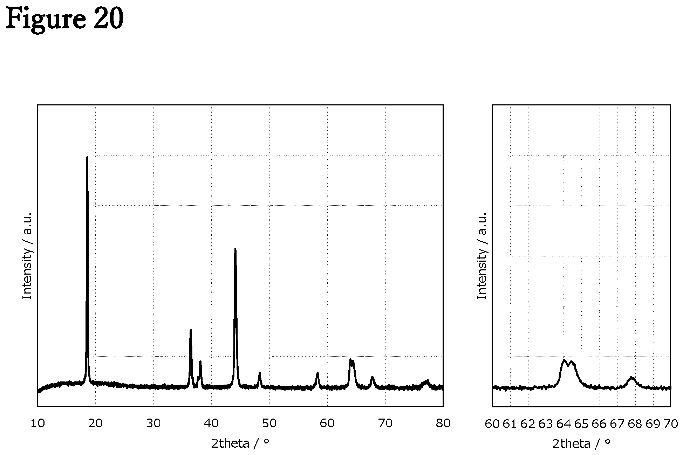

A test cell was produced, measured, and evaluated in the same manner as in Comparative Example 1 except that, in the production of the positive electrode active material, the hydroxide containing Ni and Mn at a mole ratio of 1:1, cobalt nitride hexahydrate, and lithium hydroxide were mixed at a mole ratio of Ni:Mn:Co:Li = 0.4685:0.4685:0.063:1.01. FIG. 20 shows a result of X-ray diffraction of the lithium-transition metal composite oxide of Comparative Example 7.

Table 1 shows the charge capacity, the discharge capacity, and the charge-discharge efficiency in the Examples and Comparative Examples. Table 1 also shows the proportions of the metal elements, and in the X-ray diffraction pattern by the X-ray diffraction, the ratio $I_{108}/I_{110}$ of the integrated intensity $I_{108}$ of the diffraction peak on the (108) plane relative to the integrated intensity $I_{110}$ of the diffraction peak on the (110) plane, the ratio $I_{003}/I_{104}$ of the integrated intensity $I_{003}$ of the diffraction peak on the (003) plane relative to the integrated intensity $I_{104}$ of the diffraction peak on the (104) plane, the half-value widths of the diffraction peaks on the (108) plane and the (110) plane, and the disorder amount.

[Table 1]

| | | Positive electrode active material $Li_\alpha Na_\beta Ni_{1-b-c}Mn_b X_c O_d$ | | | | | | | | | Evaluation results | | |
| | | Compositional ratio [mol%] | | | | X-ray diffraction pattern | | | | | | | |
| | X | β | α+β | b | c | $I_{108}/I_{110}$ | $I_{003}/I_{104}$ | 108 half-value width [deg.] | 110 half-value width [deg.] | Disorder amount [%] | Charge capacity [mAh/g] | Discharge capacity [mAh/g] | Charge-discharge efficiency [%] |
|---|---|---|---|---|---|---|---|---|---|---|---|---|---|
| Example 1 | — | 0.003 | 1.05 | 0.5 | — | 0.39 | 1.02 | 0.33 | 0.45 | 5.0 | 228.0 | 211.7 | 92.9 |
| Example 2 | Al | 0.009 | 1.05 | 0.4975 | 0.005 | 0.15 | 1.02 | 0.51 | 0.80 | 5.5 | 233.8 | 217.4 | 93.0 |
| Example 3 | Al | 0.013 | 1.05 | 0.495 | 0.01 | 0.08 | 1.04 | 0.44 | 0.80 | 5.8 | 237.6 | 222.3 | 93.6 |
| Example 4 | Al | 0.032 | 1.05 | 0.4875 | 0.025 | 0.08 | 1.06 | 0.44 | 0.80 | 5.1 | 230.0 | 213.9 | 93.0 |
| Example 5 | Co | 0.011 | 1.05 | 0.492 | 0.016 | 0.35 | 1.06 | 0.39 | 0.52 | 5.7 | 233.7 | 217.7 | 93.2 |
| Example 6 | Co | 0.026 | 1.05 | 0.4845 | 0.031 | 0.16 | 1.07 | 0.45 | 0.55 | 5.3 | 227.5 | 209.0 | 91.9 |
| Example 7 | Zr | 0.008 | 1.05 | 0.4975 | 0.005 | 0.13 | 1.03 | 0.29 | 0.62 | 5.6 | 228.7 | 209.5 | 91.6 |
| Example 8 | P | 0.005 | 1.05 | 0.4975 | 0.005 | 0.33 | 1.09 | 0.35 | 0.59 | 4.8 | 226.3 | 220.8 | 97.6 |
| Example 9 | P | 0.006 | 1.05 | 0.495 | 0.01 | 0.27 | 1.07 | 0.43 | 0.66 | 4.8 | 228.2 | 224.6 | 98.4 |
| Example 10 | — | 0.004 | 1.05 | 0.54 | — | 0.33 | 1.11 | 0.39 | 0.44 | 4.9 | 217.2 | 210.7 | 97.0 |
| Example 11 | — | 0.023 | 1.05 | 0.5 | — | 0.31 | 1.09 | 0.72 | 0.36 | 4.9 | 229.7 | 221.1 | 98.6 |
| Example 12 | — | 0.003 | 1.05 | 0.5 | — | 0.39 | 1.02 | 0.55 | 0.37 | 5.4 | 234.4 | 229.1 | 97.8 |
| Comparative Example 1 | — | 0 | 1.05 | 0.5 | — | 0.41 | 1.28 | 0.27 | 0.59 | 10.5 | 219.6 | 180.1 | 82.0 |
| Comparative Example 2 | Al | 0 | 1.05 | 0.4975 | 0.05 | 0.42 | 1.19 | 0.27 | 0.60 | 9.8 | 208.3 | 169.1 | 81.2 |
| Comparative Example 3 | Al | 0 | 1.05 | 0.492 | 0.016 | 0.40 | 1.20 | 0.24 | 0.58 | 9.9 | 203.9 | 161.4 | 79.2 |
| Comparative Example 4 | Al | 0 | 1.05 | 0.4845 | 0.031 | 0.60 | 1.13 | 0.31 | 0.53 | 9.7 | 204.6 | 161.2 | 78.8 |
| Comparative Example 5 | — | 0 | 1.01 | 0.5 | — | 0.96 | 1.17 | 0.30 | 0.32 | 10.2 | 214.5 | 174.6 | 81.4 |
| Comparative Example 6 | Co | 0 | 1.01 | 0.4845 | 0.031 | 0.82 | 1.14 | 0.31 | 0.40 | 9.8 | 215.6 | 179.1 | 83.1 |
| Comparative Example 7 | Co | 0 | 1.01 | 0.4685 | 0.063 | 0.99 | 1.08 | 0.38 | 0.44 | 8.5 | 220.8 | 183.5 | 83.1 |

As shown in Table 1, the test cells of Examples 1 to 12 exhibit all of the charge capacity, the discharge capacity, and the charge-discharge efficiency being higher than those of the test cells of Comparative Examples 1 to 7. Examples 2 to 4 in which Al is added in addition to Ni and Mn, Example 5 in which Co is added, and Examples 8 and 9 in which P is added tend to exhibit charge capacity, discharge capacity, and charge-discharge efficiency being higher than those of Example 1 in which Al, Co, or P is not added. By changing the condition of the step of at least partially ion-exchanging Na in the sodium composite oxide to Li, the test cells of Examples 11 and 12 tend to exhibit all of the charge capacity, the discharge capacity, and the charge-discharge efficiency being higher than those of the test cell of Example 1.

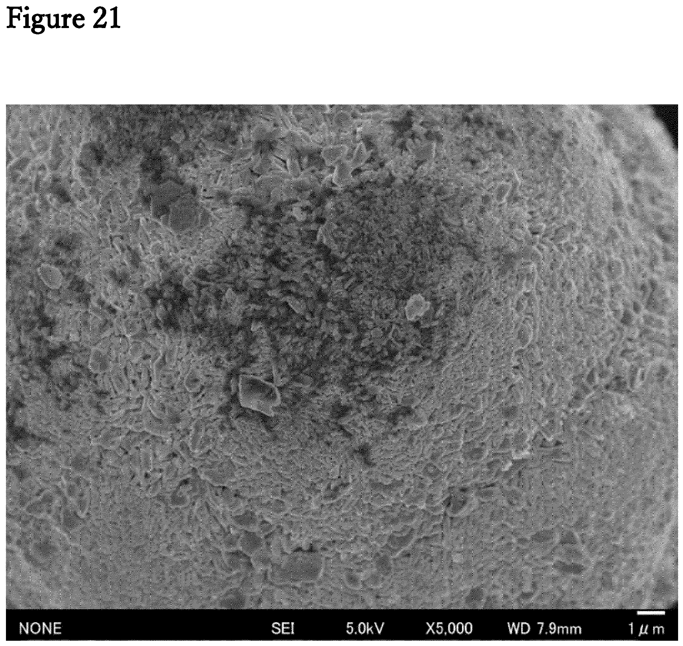

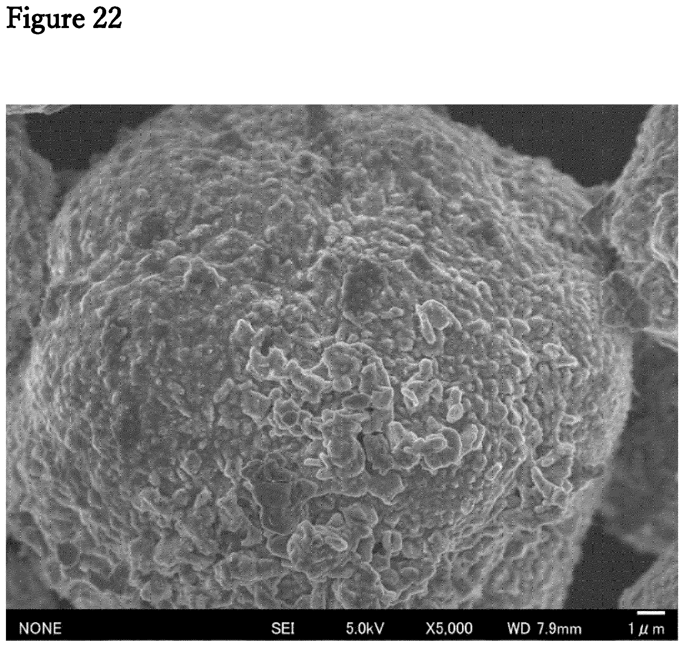

FIG. 21 and FIG. 22 show SEM images of the lithium-transition metal composite oxides produced in Example 1 and Comparative Example 1. Note that both the SEM images were photographed with a magnification of 5000. As shown in FIG. 21 and FIG. 22, both the lithium-transition metal composite oxides prepared in Example 1 and Comparative Example 1 were of substantially spherical particles. It was confirmed from the SEM images that the lithium-transition metal composite oxide of Example 1 had fine primary particles as compared with the lithium-transition metal composite oxide of Comparative Example.

The present disclosure will be further described with the following embodiments.

Constitution 1: A positive electrode active material for a non-aqueous electrolyte secondary battery, including a lithium-transition metal composite oxide represented by a compositional formula $Li_aNa_\beta Ni_{1-b-c}Mn_bX_cO_d$, wherein X represents at least one element selected from the group consisting of metal elements other than Li, Na, Ni, and Mn, $0.80 \leq \alpha \leq 1.20$, $0 \leq \beta \leq 0.05$, $0.80 \leq \alpha+\beta \leq 1.20$, $0.25 < b \leq 0.65$, $0 \leq c \leq 0.1$, $0.4 \leq 1-b-c < 0.75$, and "d" represents a value satisfying an atomic valency, wherein a ratio $I_{108}/I_{110}$ satisfies $I_{108}/I_{110} < 0.4$, the ratio being an integrated intensity $I_{108}$ of a diffraction peak on a (108) plane relative to an integrated intensity $I_{110}$ of a diffraction peak on a (110) plane of an X-ray diffraction pattern obtained by powder X-ray diffraction of the lithium-transition metal composite oxide.

Constitution 2: The positive electrode active material for a non-aqueous electrolyte secondary battery according to Constitution 1, wherein, in the compositional formula $Li_aNa_\beta Ni_{1-b-c}Mn_bX_cO_d$, X represents at least one element selected from the group consisting of Mg, Ca, Sr, Ba, Sn, Ti, Si, V, Cr, Fe, Cu, Zn, Bi, Sb, B, Ga, In, P, Zr, Hf, Nb, Ta, Mo, W, Co, and Al.

Constitution 3: The positive electrode active material for a non-aqueous electrolyte secondary battery according to Constitution 1 or 2, wherein, in the compositional formula $Li_aNa_\beta Ni_{1-b-c}Mn_bX_cO_d$, X represents Al, Co, Zr, or P.

Constitution 4: The positive electrode active material for a non-aqueous electrolyte secondary battery according to any one of Constitutions 1 to 3, wherein a ratio $I_{003}/I_{104}$ satisfies $I_{003}/I_{104} > 1.0$, the ratio being an integrated intensity $I_{003}$ of a diffraction peak on a (003) plane relative to an integrated intensity $I_{104}$ of a diffraction peak on a (104) plane of the X-ray diffraction pattern.

Constitution 5: The positive electrode active material for a non-aqueous electrolyte secondary battery according to any one of Constitutions 1 to 4, wherein half-value widths of the diffraction peaks on the (108) plane and the (110) plane of the X-ray diffraction pattern are greater than or equal to 0.2° and less than or equal to 0.8°.

Constitution 6: The positive electrode active material for a non-aqueous electrolyte secondary battery according to any one of Constitutions 1 to 5, wherein, in the compositional formula $Li_aNa_\beta Ni_{1-b-c}Mn_bX_cO_d$, a mole ratio (y) of Na satisfies $0 \leq y \leq 0.035$.

Constitution 7: A method for manufacturing a positive electrode active material for a non-aqueous electrolyte secondary battery, the method including: a step of synthesizing a sodium composite oxide represented by a compositional formula $Na_\gamma Ni_{1-b-c}Mn_bX_cO_d$, wherein X represents at least one element selected from the group consisting of metal elements other than Li, Na, Ni, and Mn, $0.80 \leq y \leq 1.20$, $0.25 < b \leq 0.65$, $0 \leq c \leq 0.1$, $0.4 \leq 1-b-c < 0.75$, and "d" represents a value satisfying an atomic valency; and a step of reacting the sodium composite oxide and a lithium compound to at least partially ion-exchange Na in the sodium composite oxide to Li.

Constitution 8: A non-aqueous electrolyte secondary battery, comprising: a positive electrode including the positive electrode active material according to any one of Constitutions 1 to 6; a negative electrode; and a non-aqueous electrolyte.

REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket

**Claims**

1. A positive electrode active material for a non-aqueous electrolyte secondary battery, including a lithium-transition metal composite oxide represented by a compositional formula $Li_aNa_\beta Ni_{1-b-c}Mn_bX_cO_d$, wherein X represents at least one element selected from the group consisting of metal elements other than Li, Na, Ni, and Mn, $0.80 \leq \alpha \leq 1.20$, $0 \leq \beta \leq 0.05$, $0.80 \leq \alpha+\beta \leq 1.20$, $0.25 < b \leq 0.65$, $0 \leq c \leq 0.1$, $0.4 \leq 1-b-c < 0.75$, and "d" represents a value satisfying an atomic valency, wherein

a ratio $I_{108}/I_{110}$ satisfies $I_{108}/I_{110} < 0.4$, the ratio being an integrated intensity $I_{108}$ of a diffraction peak on a (108) plane relative to an integrated intensity $I_{110}$ of a diffraction peak on a (110) plane of an X-ray diffraction pattern obtained by powder X-ray diffraction of the lithium-transition metal composite oxide.

2. The positive electrode active material for a non-aqueous electrolyte secondary battery according to claim 1, wherein, in the compositional formula $Li_aNa_\beta Ni_{1-b-c}Mn_bX_cO_d$, X represents at least one element selected from the group consisting of Mg, Ca, Sr, Ba, Sn, Ti, Si, V, Cr, Fe, Cu, Zn, Bi, Sb, B, Ga, In, P, Zr, Hf, Nb, Ta, Mo, W, Co, and Al.

3. The positive electrode active material for a non-aqueous electrolyte secondary battery according to claim 1, wherein, in the compositional formula $Li_aNa_\beta Ni_{1-b-c}Mn_bX_cO_d$, X represents Al, Co, Zr, or P.

4. The positive electrode active material for a non-aqueous electrolyte secondary battery according to claim 1, wherein a ratio $I_{003}/I_{104}$ satisfies $I_{003}/I_{104} > 1.0$, the ratio being an integrated intensity $I_{003}$ of a diffraction peak on a (003) plane relative to an integrated intensity $I_{104}$ of a diffraction peak on a (104) plane of the X-ray diffraction pattern.

5. The positive electrode active material for a non-aqueous electrolyte secondary battery according to claim 1, wherein half-value widths of the diffraction peaks on the (108) plane and the (110) plane of the X-ray diffraction pattern are greater than or equal to 0.2° and less than or equal to 0.8°.

6. The positive electrode active material for a non-aqueous electrolyte secondary battery according to claim 1, wherein, in the compositional formula $Li_aNa_\beta Ni_{1-b-c}Mn_bX_cO_d$, a mole ratio ($\beta$) of Na satisfies $0 \le y \le 0.035$.

7. A method for manufacturing a positive electrode active material for a non-aqueous electrolyte secondary battery, the method including:

   a step of synthesizing a sodium composite oxide represented by a compositional formula $Na_\gamma Ni_{1-b-c}Mn_bX_cO_d$, wherein X represents at least one element selected from the group consisting of metal elements other than Li, Na, Ni, and Mn, $0.80 \le y \le 1.20$, $0.25 < b \le 0.65$, $0 \le c \le 0.1$, $0.4 \le 1-b-c < 0.75$, and "d" represents a value satisfying an atomic valency; and
   a step of reacting the sodium composite oxide and a lithium compound to at least partially ion-exchange Na in the sodium composite oxide to Li.

8. A non-aqueous electrolyte secondary battery, comprising:

   the positive electrode including the positive electrode active material according to any one of claims 1 to 6;
   a negative electrode; and
   a non-aqueous electrolyte.

# Figure 1

Figure 2

# Figure 3

Figure 4

# Figure 5

Figure 6

Figure 7

# Figure 8

Figure 9

# Figure 10

Figure 11

Figure 12

# Figure 13

# Figure 14

# Figure 15

Figure 16

Figure 17

Figure 18

# Figure 19

EP 4 597 623 A1

## Figure 20

35

Figure 21

NONE          SEI      5.0kV      X5,000      WD 7.9mm      1 $\mu$m

Figure 22

**EP 4 597 623 A1**

## INTERNATIONAL SEARCH REPORT

International application No.

**PCT/JP2023/033166**

| A. | CLASSIFICATION OF SUBJECT MATTER |
|---|---|

*H01M 4/525*(2010.01)i; *C01G 53/00*(2006.01)i; *H01M 4/505*(2010.01)i
FI: H01M4/525; C01G53/00 A; H01M4/505

According to International Patent Classification (IPC) or to both national classification and IPC

| B. | FIELDS SEARCHED |
|---|---|

Minimum documentation searched (classification system followed by classification symbols)

H01M4/525; C01G53/00; H01M4/505

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2014/103166 A1 (SANYO ELECTRIC CO., LTD.) 03 July 2014 (2014-07-03) claim 1, paragraphs [0018], [0019] | 7 |
| A | claim 1, paragraphs [0018], [0019] | 1-6, 8 |
| A | JP 2007-257885 A (NISSAN MOTOR CO., LTD.) 04 October 2007 (2007-10-04) claims 1-3, fig. 1 | 1-8 |
| A | JP 2014-222583 A (ASAHI GLASS CO., LTD.) 27 November 2014 (2014-11-27) claim 1, fig. 1, 2 | 1-8 |
| A | JP 2013-112531 A (TANAKA CHEMICAL CORP.) 10 June 2013 (2013-06-10) claim 1 | 1-8 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 November 2023** | **05 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

38

## INTERNATIONAL SEARCH REPORT
### Information on patent family members

International application No.

**PCT/JP2023/033166**

| Patent document cited in search report | Publication date (day/month/year) | Patent family member(s) | Publication date (day/month/year) |
|---|---|---|---|
| WO 2014/103166 A1 | 03 July 2014 | US 2015/0243982 A1 claim 1, paragraphs [0022], [0023] CN 104603996 A | |
| JP 2007-257885 A | 04 October 2007 | (Family: none) | |
| JP 2014-222583 A | 27 November 2014 | (Family: none) | |
| JP 2013-112531 A | 10 June 2013 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005053764 A

**Non-patent literature cited in the description**

- **F. IZUMI ; K. MOMMA**. *Solid State Phenom*, 2007, vol. 130, 15-20